# EUROPÄISCHE PATENTSCHRIFT

(11) **EP 2 264 329 B1**
(45) Veröffentlichungstag und Bekanntmachung des Hinweises auf die Patenterteilung: **17.04.2013**
(21) Anmeldenummer: 10162614.1
(22) Anmeldetag: 12.05.2010
(51) Int. Cl.: F16D 25/08, F15B 15/26

(54) **Druckmittelzylinder für eine Betätigungseinrichtung eines Kraftfahrzeuges mit einem arretierbaren Kolben**
Pressure cylinder for an actuation device of a motor vehicle with an adjustable piston
Vérin à fluide sous pression pour un dispositif d'actionnement d'un véhicule automobile doté d'un piston pouvant être bloqué

(30) Priorität: 05.06.2009 DE 102009026766
(43) Veröffentlichungstag der Anmeldung: 22.12.2010
(73) Patentinhaber: ZF Friedrichshafen AG, 88038 Friedrichshafen (DE)
(72) Erfinder: Baumgart, Sebastian, 97072, Würzburg (DE); Wegner-Braun, Holger, 97505, Geldersheim (DE); Frank, Markus, 91602, Dürrwangen (DE)

(56) Entgegenhaltungen:
- EP-A1- 0 309 066
- EP-A2- 1 666 752
- DE-A1-102006 029 566
- JP-A- 4 029 604

## Beschreibung

Die Erfindung betrifft einen Druckmittelzylinder für eine Betätigungseinrichtung eines Kraftfahrzeuges mit einem arretierbaren Kolben gemäß dem Oberbegriff von Patentanspruch 1.

Hintergrund der Erfindung ist der Wunsch, beispielsweise einen Hydraulikzylinder für eine Kupplungsbetätigung eines Kraftfahrzeuges zur Erleichterung der Montage an einem Fahrzeug in einer eingefahrenen arretierten Kolbenstellung zu montieren und die Arretierung nach erfolgtem Einbau zu lösen.

Ein Druckmittelzylinder ist bereits mit der EP 1 666 752 B1 bekannt geworden. Der dort beschriebene Hydraulikzylinder weist zur zeitweiligen Fixierung des Kolbens ein innerhalb des Druckraums am Gehäuseboden eingesetztes separates Fixierelement auf, welches mit dem Kolben verrastbar ist. Bei einer Druckbeaufschlagung des Kolbens über einen das Gehäuse und das Fixierelement durchsetzenden Druckanschluss, kann sich der Kolben aus dieser Lage lösen. Das Fixierelement dient dort weiter der Entlüftung des Hydraulikzylinders, wozu das Fixierelement einen Entlüftungskanalabschnitt aufweist, welcher zur Realisierung einer Entlüftungsfunktion innerhalb des Gehäuses eine vorbestimmte Lage einnehmen muss, was eine gerichtete Montage des Fixierelementes erfordert. Zudem weist der Hydraulikzylinder eine auf der dem Druckraum abgewandten Seite des Kolbens angeordnete Rückstellfeder auf, welche den Kolben in Richtung der ausgefahrenen Stellung belastet. Mit der besonderen Ausgestaltung und gerichteten Montage des Fixierelementes ist ein merklicher Herstellungs- und Montageaufwand verbunden.

Die EP 0 309 066 A1 offenbart einen gattungsgemäßen Druckmittelzylinder mit zwei Druckanschlüssen und mit zwei durch einen Kolben getrennten Arbeitsräumen, wobei der Zylinder als Stellglied einer hydraulisch betätigbaren Entfaltungsmechanik eines faltbaren Kraftfahrzeugdaches arbeitet. In einer geöffneten Stellung des Daches wird der Druckmittelzylinder arretiert, indem ein an dessen Kolben ausgeführter leicht konischer Vorsprung in eine am Kolbenboden eines ersten Arbeitsraumes vorgesehene entsprechende leicht konische Ausnehmung formschlüssig eingreifen und sich dort unter der Wirkung eines in einem zweiten Arbeitsraum angelegten Druckes verklemmen kann. Diese Klemmung kann durch Anlegen eines Druckes in dem ersten Arbeitsraum wieder gelöst werden.

Der vorliegenden Erfindung liegt von diesem Stand der Technik ausgehend, die Aufgabe zugrunde, einen kostengünstigeren Druckmittelzylinder der eingangs genannten Art mit einem lösbar arretierbaren Kolben darzustellen. Der Kolben soll dabei auch bei Wirkung einer permanenten, durch ein Rückstellelement aufgebrachten begrenzten Rückstellkraft sicher arretiert werden können.

Die vorstehend genannte Aufgabe wird durch einen gemäß Patentanspruch 1 definierten Druckmittelzylinder gelöst. Demnach wird ein Druckmittelzylinder für eine Betätigungseinrichtung eines Kraftfahrzeuges vorgeschlagen, welcher ein Gehäuse mit einem Gehäuseboden und mit einem Druckanschluss umfasst und eine darin ausgebildeten Laufbuchse aufweist, in der ein Kolben längsverschieblich geführt ist und einen variablen Druckraum begrenzt. Innerhalb des Druckraums ist zwischen dem Kolben und dem Gehäuseboden eine lösbare Arretierverbindung mit einem einteilig mit dem Gehäuse ausgebildeten gehäusebodenseitigen Arretierelement vorgesehen, welche den Kolben in einer eingefahrenen Stellung arretiert und die dazu ausgebildet ist, die Arretierung durch eine druckraumseitige Druckbeaufschlagung des Kolbens zu lösen. Gemäß der Erfindung ist hierbei vorgesehen, die Arretierverbindung als Kugelschnappverbindung auszubilden.

Der Vorteil dieser Lösung ist darin zu sehen, dass auf separate, in das Gehäuse einzubringende Arretierelemente verzichtet und dadurch eine kostengünstige Herstellung eines solchen Druckmittelzylinders ermöglicht wird. Insbesondere kann das Gehäuse zumindest im Bereich des Bodens und auch der diesem gegenüberstehende Kolbenboden vorteilhaft aus einem Kunststoff, z.B. einem Thermoplast wie PA 66 oder einem Duroplast hergestellt werden, wodurch insbesondere das gehäusebodenseitige Arretierelement mit den bekannten Kunststoffverarbeitungsverfahren günstig herstellbar ist.

Bei dem erfindungsgemäßen Druckmittelzylinder ist die Arretierverbindung als Kugelschnappverbindung ausgeführt und weist dazu einen Kugelkopf und eine Kugelkalotte mit einem Hinterschnitt auf, welcher von dem Kugelkopf zum Einrasten kurzzeitig elastisch aufgeweitet wird. Zu diesem Zweck kann die Kugelkalotte mit mehreren Federarmen segmentiert ausgebildet sein.

Durch die Kugelschnappverbindung kann der Kolben bei Einnahme der eingefahrenen Stellung mit einer an dessen druckraumseitiger Stirnseite angeordneten Eingriffskontur in eine dazu direkt am Gehäuseboden integrierte weitere Eingriffskontur eingreifen und dort auch unter der Wirkung eines Rückstellelementes sicher arretiert werden. Die Arretierung kann dann bei einer Befüllung des Druckraums und dem Anlegen eines Druckes gelöst werden, was z.B. durch eine Betätigung eines mit dem Druckmittelzylinder über eine Druckleitung verbundenen weiteren Druckmittelzylinders erfolgen kann. Bei der bestimmungsgemäßen Benutzung des Druckmittelzylinders, insbesondere bei einer Brems- oder Kupplungsbetätigungseinrichtung eines Kraftfahrzeuges, ist der Arbeitshub des erfindungsgemäßen Druckmittelzylinders im Rahmen der Betätigungseinrichtung begrenzt, so dass die Arretierstellung des Kolbens im Normalbetrieb nicht mehr eingenommen werden kann. Der Druckmittelzylinder kann sowohl als Nehmer- als auch als Geberzylinder ausgebildet sein.

Zur Ermöglichung einer Rückstellung des Kolbens kann der Druckmittelzylinder eine Rückstellfeder zur Belastung des Kolbens in eine ausgefahrene Stellung aufweisen, welche mit Vorteil innerhalb des Druckraums zwischen dem Gehäuseboden und dem Kolben angeordnet ist. Die Arretierverbindung ist so ausgelegt, dass deren Haltekraft die Kraft der im Druckraum vorgespannten Feder übersteigt. Es ist jedoch alternativ auch möglich, am Druckmittelzylinder auf eine Rückstellfeder zu verzichten und diese abseits von diesem an einem weiteren zu einer Betätigungseinrichtung zugehörigen Funktionselement anzuordnen. Damit kann der Kolben zum Transport und der Montage des Druckmittelzylinders quasi kräftefrei arretiert werden und die Arretierverbindung kann entsprechend der geringeren Belastung kleiner dimensioniert werden.

Nachfolgend wird die Erfindung beispielhaft anhand der beigefügten Figuren beschrieben. Es zeigen:
- Fig. 1: eine Schnittdarstellung eines hydraulischen Nehmerzylinders mit einem am Gehäuseboden arretierten Kolben;
- Fig. 2: eine Schnittdarstellung des Nehmerzylinders von Fig. 1, wobei der Kolben von der Arretierung gelöst ist.

Die Figuren zeigen einen als hydraulischen Nehmerzylinder ausgebildeten Druckmittelzylinder 10 zur Betätigung einer zeichnerisch nicht dargestellten Kraftfahrzeugreibungskupplung. Der Nehmerzylinder 10 umfasst ein aus einem Thermoplastwerkstoff gefertigtes Kunststoffgehäuse 12 mit einem Gehäuseboden 14, mit einem Druckanschluss 16 und mit einer Laufbuchse 18, in der ein ebenfalls aus einem Kunststoff, insbesondere aus Duroplast gefertigter Kolben 20 längsverschieblich geführt ist und einen variablen Druckraum 22 begrenzt. Der Druckraum 22 wird hierbei durch eine am Kolben 20 angeordnete und mit der Laufbuchse zusammenwirkenden Elastomerringdichtung 24 abgedichtet und kann mittels einer seitlich, im Bereich des Druckanschlusses 16 in diesen mündenden und in bekannter Weise ausgeführten Entlüftungsbohrung 26 entlüftet werden. Der Kolben 20 wird von einer verschwenkbeweglich an diesem angeordneten Kolbenstange 28 angelenkt, welche an deren gegenüberliegenden Ende einen Gleitschutz 30 zum Zusammenwirken mit einem zeichnerisch nicht dargestellten Kupplungshebel trägt. Zwischen dem offenen Endbereich des Gehäuses 12 und dem Gleitschutz 30 ist ein elastischer Faltenbalg 32 eingesetzt, der die Kolbenstange 28 umschließt und den Zylinderinnenraum mit der Laufbuchse 18 gegenüber äußeren Einflüssen schützt.

Innerhalb des Druckraums 22 ist zwischen dem Kolben 20 und dem Gehäuseboden 14 eine lösbare Arretierverbindung 34 vorgesehen, welche den Kolben 20 in einer eingefahrenen Stellung arretiert und die dazu ausgebildet ist, die Arretierung durch eine druckraumseitige Druckbeaufschlagung des Kolbens 20 zu lösen.

Die Arretierverbindung 34 ist im Ausführungsbeispiel als Kugelschnappverbindung ausgeführt, wozu die druckraumseitige Stirnseite des Kolbens 30 einen dort angeformten Kugelzapfen 36 und der Gehäuseboden 14 innerhalb des Druckraums 22 eine dazu korrespondierend und integral mit dem Gehäuse 12 ausgebildete Kugelkalotte 38 mit einem Hinterschnitt aufweist. In den Figuren ist erkennbar, dass die Kugelkalotte 38 mit mehreren Federarmen segmentiert ausgebildet ist.

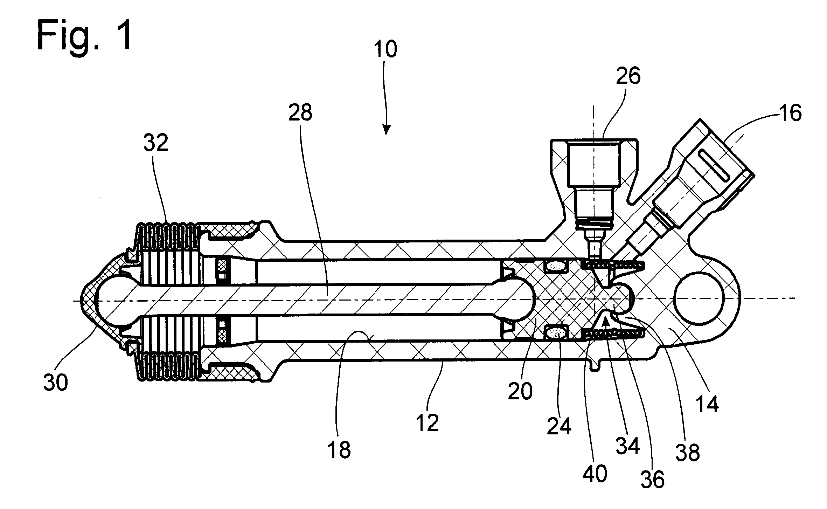

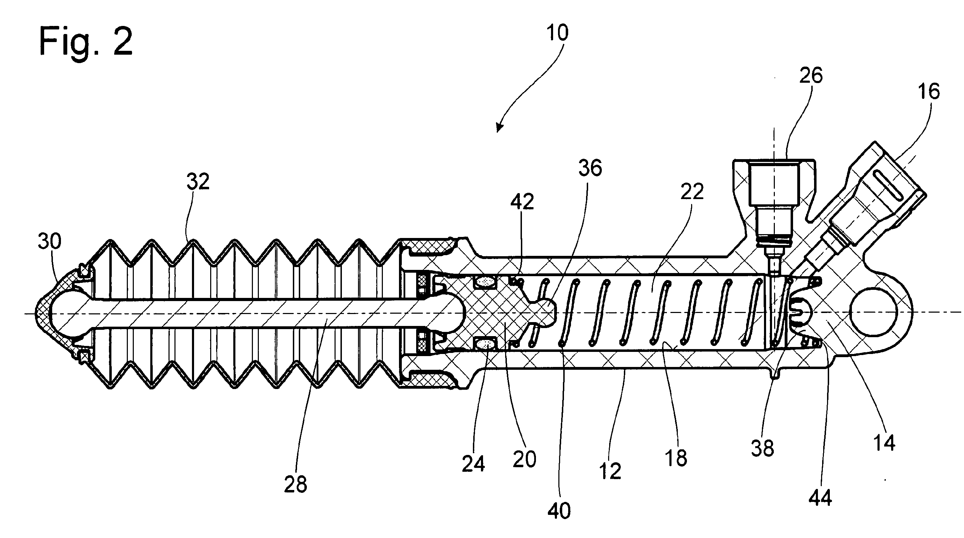

Zur Ermöglichung einer Rückstellung des Kolbens 20 umfasst der Nehmerzylinder 10 eine Rückstellfeder in Form einer Schraubendruckfeder 40 zur Belastung des Kolbens 20 in dessen ausgefahrene Stellung. Die Rückstellfeder 40 ist innerhalb des Druckraums 22 zwischen dem Gehäuseboden 14 und dem Kolben 20 angeordnet und stützt sich mit deren Endbereichen an zwei Ringflächen 42, 44 ab, die einerseits am Kolben 20 und andererseits am Gehäuseboden 14 in deren radial äußeren Bereichen ausgebildet sind (Fig. 2). Die Eingriffskonturen 36, 38 der Kugelschnappverbindung 34 sind zueinander erhaben ausgebildet und werden auf diese Weise in einem radialen Abstand von der Rückstellfeder 40 umschlossen, so dass eine gegenseitige Berührung und Behinderung der Rückstellfeder 40 mit den Eingriffskonturen 36, 38 insbesondere im arretierten Zustand des Kolbens 20 sicher vermieden wird (Fig. 1).

Die Arretierverbindung 34 ist so ausgelegt, dass deren Haltekraft die Kraft der im Druckraum 22 vorgespannten Rückstellfeder 40 übersteigt. Vor der Montage des Druckmittelzylinders 10 an einem Fahrzeug wird der Kolben 20 in dessen vollständig eingefahrene Stellung bewegt, wobei dessen Kugelkopf 36 in die unmittelbar mit dem Gehäuseboden 14 ausgebildete Kugelkalotte 38 eingreift und dort verschnappt. Damit ist der Kolben 20 gegenüber dem Gehäuse 12 arretiert. In dieser Stellung kann der Druckmittelzylinder 10 an einem Fahrzeug verbaut werden, um die Arretierung des Kolbens 20 nachfolgend bei einer Fluidbefüllung des Druckraums 22 und dem Anlegen eines Fluiddruckes wieder zu lösen, was z.B. durch eine Betätigung eines mit dem Druckmittelzylinder 10 über eine Druckleitung verbundenen weiteren Druckmittelzylinders erfolgen kann. Bei der bestimmungsgemäßen Benutzung des Druckmittelzylinders 10, insbesondere bei einer Brems- oder Kupplungsbetätigungseinrichtung eines Kraftfahrzeuges, ist dessen Arbeitshub im Rahmen der Betätigungseinrichtung begrenzt, so dass die Arretierstellung des Kolbens 20 im Normalbetrieb nicht mehr eingenommen werden kann.

### Bezugszeichenliste

| | |
|---|---|
| 10 | Druckmittelzylinder |
| 12 | Gehäuse |
| 14 | Gehäuseboden |
| 16 | Druckanschluß |
| 18 | Laufbuchse |
| 20 | Kolben |
| 22 | Druckraum |
| 24 | Dichtung |
| 26 | Entlüftungsbohrung |
| 28 | Kolbenstange |
| 30 | Gleitschutz |
| 32 | Faltenbalg |
| 34 | Arretierverbindung |
| 36 | Kugelkopf |
| 38 | Kugelkalotte |
| 40 | Rückstellfeder |
| 42, 44 | Ringfläche |

## Patentansprüche

1. Druckmittelzylinder (10) für eine Betätigungseinrichtung eines Kraftfahrzeuges umfassend
- ein Gehäuse (12) mit einem Gehäuseboden (14), einem Druckanschluss (16) und mit einer darin ausgebildeten Laufbuchse (18),
- einen Kolben (20), der in der Laufbuchse (18) längsverschieblich geführt ist und der einen variablen Druckraum (22) begrenzt,
- eine im Druckraum (22) zwischen dem Kolben (20) und dem Gehäuseboden (14) ausgebildete lösbare Arretierverbindung (34), welche den Kolben (20) in einer eingefahrenen Stellung arretiert und dazu ausgebildet ist, die Arretierung durch eine druckraumseitige Druckbeaufschlagung des Kolbens (20) zu lösen, wobei
- ein gehäusebodenseitiges Arretierelement (38) einteilig mit dem Gehäuse (12) ausgebildet ist,
**dadurch gekennzeichnet,**
**dass** die Arretierverbindung (34) als Kugelschnappverbindung ausgeführt ist.

2. Druckmittelzylinder nach Anspruch 1,
**dadurch gekennzeichnet,**
**dass** eine Rückstellfeder (40) zur Belastung des Kolbens (20) in eine ausgefahrene Stellung zwischen dem Gehäuseboden (14) und dem Kolben (20) angeordnet ist.

## Claims

1. Pressure-medium cylinder (10) for an actuating device of a motor vehicle comprising
- a housing (12) with a housing bottom (14), a pressure connection (16) and with a liner (18) which is formed therein,
- a piston (20) which is guided longitudinally displaceably in the liner (18) and which delimits a variable pressure space (22),
- a releasable locking connection (34) which is configured in the pressure space (22) between the piston (20) and the housing bottom (14), locks the piston (20) in a retracted position and is configured for releasing the locking action by way of pressure loading of the piston (20) on the pressure-space side,
- a locking element (38) on the housing-bottom side being configured in one piece with the housing (12),
**characterized in that** the locking connection (34) is configured as a ball snap connection.

2. Pressure-medium cylinder according to Claim 1, **characterized in that** a restoring spring (40) is arranged between the housing bottom (14) and the piston (20) in order to load the piston (20) into an extended position.

## Revendications

1. Vérin à fluide sous pression (10) pour un dispositif d'actionnement d'un véhicule automobile, comprenant
- un boîtier (12) avec un fond de boîtier (14), un raccord de pression (16) et une chemise de vérin (18) réalisée dans celui-ci,
- un piston (20), qui est guidé de manière déplaçable longitudinalement dans la chemise de cylindre (18) et qui délimite un espace de pression variable (22),
- une liaison de blocage (34) libérable réalisée dans l'espace de pression (22) entre le piston (20) et le fond de boîtier (14), laquelle bloque le piston (20) dans une position enfoncée et est réalisée de manière à libérer le blocage par une sollicitation en pression du piston (20) du côté de l'espace de pression,
- un élément de blocage (38) du côté du fond de boîtier étant réalisé d'une seule pièce avec le boîtier (12),
**caractérisé en ce que**
la liaison de blocage (34) est réalisée sous forme de liaison par encliquetage à bille.

2. Vérin à fluide sous pression selon la revendication 1,
**caractérisé en ce**
**qu'**un ressort de rappel (40) pour la sollicitation du piston (20) dans une position déployée est disposé entre le fond de boîtier (14) et le piston (20).
